# EUROPEAN PATENT SPECIFICATION

(11) **EP 1 061 226 B1**
(45) Date of publication and mention of the grant of the patent: **20.10.2004**
(21) Application number: 00110825.7
(22) Date of filing: 22.05.2000
(51) Int. Cl.: E05F 15/16, B60R 22/32

(54) **Submergence detection power-window apparatus**
Fensterheber-Antriebsvorrichtung mit Versenkungsdetektor
Dispositif lève-vitre motorisé avec détecteur de submersion

(30) Priority: 21.05.1999 JP 14209099
(43) Date of publication of application: 20.12.2000
(73) Proprietor: ALPS ELECTRIC CO., LTD., Ota-ku Tokyo (JP)
(72) Inventor: Hiwatari, Minoru, c/o Alps Electric Co., Ltd., Tokyo (JP)
(74) Representative: Klunker . Schmitt-Nilson . Hirsch

(56) References cited:
- EP-A- 0 398 307
- EP-A- 0 898 039
- EP-A- 0 931 899
- DE-U- 29 617 425
- JP-A- 63 247 149

## Description

### BACKGROUND OF THE INVENTION

### Field of the Invention

The present invention relates to a submergence detection power-window apparatus according to the preamble of claim 1. An apparatus of this type is known from DE 296 17425 U. This type of apparatus automatically opens an electrical-power driven opening unit such as a window, a sunroof or the like by actuation of an opening switch employed in the electrical-power driven opening unit when the car submerges under water, causing a submergence detection signal to be output.

### Description of the Related Art

As commonly known, a power-window apparatus employed in a car generally comprises a window operation unit provided in a door pocket on the driver-seat side or window operation units provided in door pockets on the driver-seat side and the assistant-driver-seat side respectively. As another alternative, the power-window apparatus comprises window operation units provided in door pockets on the driver-seat side, the assistant-driver-seat side and the rear-seat sides respectively.

Each window operation unit of the commonly known power-window apparatus includes window opening/closing manual switches, a driving motor for opening and closing the window and a driving control unit. The window opening/closing manual switches are a window opening switch and a window closing switch. The driving control unit drives the driving motor in a direction according to operations of the window opening switch and the window closing switch.

When a car having such a power-window apparatus submerges under water due to some causes, causing water to flow into the inside of the car, the water also enters the door pocket containing a window operation unit. With the window operation unit submerged in the water, the water also enters the window opening switch and the window closing switch. In this state, it is difficult to maintain electrical insulation between contact points in the window opening switch and the window closing switch. Thus, the contact points are brought into a state of being connected through a relatively small resistance of the water in spite of the fact that the switch including the contact points is put in an open state. As a result, when the window opening switch is operated later, the driving control unit of the motor associated with the window opening switch does not function normally. In consequence, the window can not be opened even if the window opening switch is operated and, accordingly, the passengers are not capable of escaping from the car submerged under the water with ease.

In order to solve the problem described above, the applicant of a patent for the present invention has recently proposed a window operation unit that is employed in a power-window apparatus, installed in a door pocket on the driver-seat side and provided with a submergence detection control circuit connected to a submergence detector having a submergence detection sensor.

In the case of the proposed power-window apparatus described above, when a car submerges under water due to some causes, causing water to flow into the inside of the car and also to enter the door pocket on the driver-seat side, the submergence detection sensor detects the flowing water, causing the submergence detector to generate a submergence detection signal and supply the signal to the submergence detection control circuit. At that time, even if water starts flowing into the window opening switch of the window operation unit provided on the driver-seat side, within a predetermined period following the submergence state, the submergence detection control circuit causes the motor to be driven to open the window on the driver-seat side if the window opening switch employed in the window operation unit provided on the driver-seat side is manually operated. As a result, the window on the driver-seat side can be opened to allow the passengers including the driver to get out from the submerging car.

In the case of the proposed power-window apparatus described above, when a car submerges under water, causing water to flow into the inside of the car and also to enter the door pocket on the driver-seat side, the window on the driver-seat side can be opened if the window opening switch employed in the window operation unit provided on the driver-seat side is manually operated within a predetermined period following the submergence state.

In the case of the proposed power-window apparatus described above, however, when water starts flowing to the inside of the car, entering the door pocket on the driver-seat side, the submergence detection sensor of the submergence detector employed in the window operation unit provided on the driver-seat side detects the flowing water, causing the submergence detector to generate a submergence detection signal and supply the signal to the submergence detection control circuit. At that time, the window on the driver-seat side can be opened by manually operating the window opening switch employed in the window operation unit provided on the driver-seat side. If the window opening switch is not operated, on the contrary, the window is not opened so that a quick escape from the submerging car is obstructed.

On the other hand, the passenger of the car normally fastens its seat belt while the car is running so that, even after the car submerges under water due to some causes, the seat belt usually remains fastened as it is. Thus, if the window opening switch employed in the window operation unit provided on the driver-seat side is manually operated to open the window on the driver-seat side with the passenger keeps its seat belt fastened when a car with the proposed power-window apparatus described above submerges under water and the water starts flowing to the inside of the car, a large amount of water will flow to the inside of the car through the opened window. Thus, it becomes difficult to loosen the seat belt. As a result, it is too late for the passenger to escape from the submerged car.

In accordance with the pre-characterizing part of claim 1, DE 296 17 425 U discloses an apparatus in which the seat belt is automatically released in case of an accident wherein a time delay is provided between the detection of an accident situation and the release of the seat belt. Moreover, a switch having a floating element is provided for detecting a submergence situation. In such situation, the seat belt is released without delay.

JP 63 24 7149 A discloses a seat belt system which releases the buckle of a seat belt as soon as a water detector detects the entering water.

### SUMMARY OF THE INVENTION

It is an object of the present invention to provide a submergence detection power-window apparatus which allows passengers to escape from the submerging car with ease by automatically opening an electrical-power driven opening unit upon detection of a loosened state of a seat belt after generation of a submergence detection signal to indicate submergence of the car.

In order to achieve the object described above, the submergence detection power-window apparatus provided by the present invention is equipped with the features of claim 1. Preferred embodiments are defined by the dependent claims.

When a car submerges under water, causing the submergence detector to generate a submergence detection signal and supply the signal to the control unit, in response to the submergence detection signal, the control unit immediately drives the motor in a direction to open the electric-power driven opening unit. As a result, the electric-power driven opening unit automatically opens, allowing passengers to escape from the submerging car through the opened electric-power driven opening unit safely. In addition, the submergence detector preferably comprises a pair of mutually facing metallic bars placed at positions adjacent to each other, and water introduced between the metallic bars serves as a direct electrical conductor between the metallic bars, causing a submergence detection signal to be generated. Thus, the submergence of the car can be detected quickly.

When a car submerges under water, causing the submergence detector to generate a submergence detection signal and supply the submergence detection signal to the control unit, and if the passenger loosens a seat belt to escape from the submerging car, causing the fastened/loosened-seat-belt detector to generate a loosened-seat-belt detection signal and supply the loosened-seat-belt detection signal to the control unit, in response to the submergence detection signal, the control unit immediately drives the motor in a direction to open the electric-power driven opening unit. As a result, the electric-power driven opening unit automatically opens, allowing the passenger who has loosened the seat belt to escape from the submerging car through the opened electric-power driven opening unit safely and surely.

In a typical version of an embodiment of the present invention, the submergence detection power-window apparatus includes a fastened/loosened seat-belt detector which is used for generating a loosened seat-belt detection signal when a fastening unit of a seat-belt buckle is loosened.

According to this embodiment, the passenger loosens the seat belt to start opening the electric-power driven opening unit after completing preparation for escaping from the submerging car. Thus, the passenger is capable of escaping from the submerging car safely.

In a typical preferred implementation of the present invention, the submergence detection power-window apparatus includes a fastened/loosened seat-belt detection sensor provided in a fastened/loosened seat-belt detector.

According to this embodiment, a loosened state of a seat belt can be detected with a high degree of accuracy.

In another typical implementation of the present invention, the submergence detection power-window apparatus includes a fastened/loosened seat-belt detector which generates a loosened seat-belt detection signal when the seat belt is cut.

According to this embodiment, an electric-power driven opening unit is opened when a seat belt is cut in case the seat belt can not be loosened for some reasons. Thus, the passenger is capable of escaping from the submerging car.

In an implementation of the the present invention, the electric-power driven opening unit is the window on the driver-seat side.

According to this embodiment, the opened window is the window on the driver-seat side on which the passenger is most likely sitting. Thus, the passenger is capable of escaping from the submerging car quickly.

In another implementation of the present invention, the electric-power driven opening unit is an electric-power driven sunroof.

According to this embodiment, the opened electric-power driven opening unit is an electric-power driven sunroof which is most likely the last component of the submerging car left above the surface of water. Thus, the passenger is capable of escaping from the submerging car surely.

### BRIEF DESCRIPTION OF THE DRAWINGS

Fig. 1 is a block diagram showing the configuration of a submergence detection power-window apparatus, described in order to facilitate the understanding of the present invention;
Fig. 2 is a block diagram showing the configuration of a second submergence detection power-window apparatus;
Fig. 3 is a block diagram showing the configuration of a first embodiment implementing a submergence detection power-window apparatus provided by the present invention;
Fig. 4 is a block diagram showing the configuration of a second embodiment implementing a submergence detection power-window apparatus provided by the present invention; and
Fig. 5 is an explanatory diagram showing typical configurations of 4 types of fastened/loosened seat-belt detector employed in the first and second embodiments.

### DESCRIPTION OF THE PREFERRED EMBODIMENTS

Some preferred embodiments of the present invention are described in detail by referring to diagrams as follows.

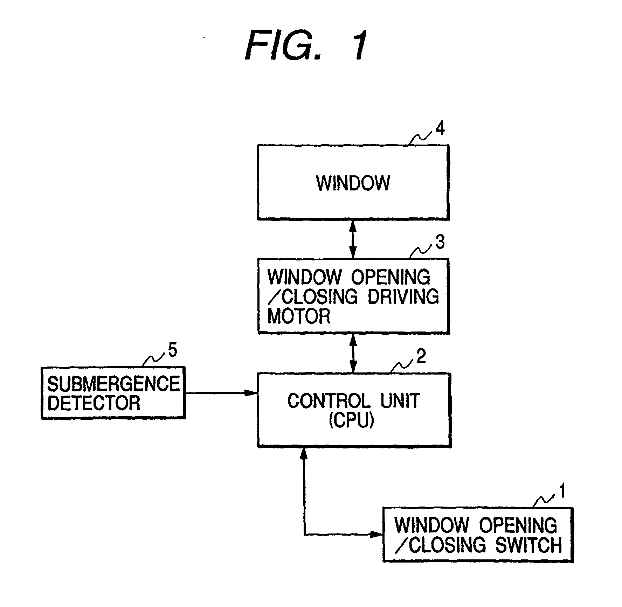

Fig. 1 is a block diagram showing the configuration of a submergence detection power-window apparatus.

As shown in Fig. 1, the submergence detection power-window apparatus comprises a window opening/closing switch 1, a control unit (a CPU) 2, a window opening/closing driving motor 3, a window such as the driver-seat side window 4 and a submergence detector 5.

Connected to the control unit 2, the window opening/closing switch 1 comprises a window opening switch and a window closing switch which are not shown in the figure. The control unit 2 is also connected to the window opening/closing driving motor 3 and the submergence detector 5. When the window opening switch of the window opening/closing switch 1 is operated, the window opening/closing driving motor 3 is driven in response to the operation into rotation in a direction, namely, a window opening direction. When the window closing switch of the window opening/closing switch 1 is operated, on the other hand, the window opening/closing driving motor 3 is driven in response to the operation into rotation in another direction, namely, a window closing direction. When a submergence detection signal is generated by the submergence detector 5, the window opening/closing driving motor 3 is driven into rotation in a direction, namely, the window opening direction, without regard to the operating states of the window closing switch and the window opening switch employed in the window opening/closing switch 1. The window opening/closing driving motor 3 is joined to a window such as the driver-seat side window 4 by a window driving mechanism which is not shown in the figure. With such a joint, when the window opening/closing driving motor 3 is driven into rotation in the window opening direction, the window driving mechanism moves the driver-seat side window 4 in the opening direction. When the window opening/closing driving motor 3 is driven into rotation in the window closing direction, on the other hand, the window driving mechanism moves the driver-seat side window 4 in the closing direction. The submergence detector 5 has a submergence detection sensor which is not shown in the figure. The submergence detection sensor typically comprises a pair of mutually facing metallic plates placed at positions adjacent to each other or a pair of mutually facing metallic bars placed at positions adjacent to each other. The submergence detector 5 generates a submergence detection signal in response to a change in current flowing through the submergence detection sensor. To put it in detail, when water flowing into the inside of the car inundates the submergence detection sensor, the current of the sensor increases, exceeding a predetermined value. At that time, a submergence detection signal is generated.

The submergence detection power-window apparatus implemented having the configuration described above operates as follows.

First of all, the following description explains an operation which is carried out when the car is in a steady state, that is, in a state of no submergence.

When a passenger operates the window opening switch of the window opening/closing switch 1, the control unit 2 applies a driving voltage to the window opening/closing driving motor 3 in response to the operation of the window opening switch. The driving voltage drives the window opening/closing driving motor 3 into rotation in a direction to open the driver-seat side window 4. The rotation of the window opening/closing driving motor 3 driven in this direction is propagated to the driver-seat side window 4 through the window driving mechanism. As a result of the operation, the driver-seat side window 4 is moved in the opening direction. When a passenger operates the window closing switch of the window opening/closing switch 1, the control unit 2 also applies a driving voltage to the window opening/closing driving motor 3 in response to the operation of the window closing switch. However, the driving voltage drives the window opening/closing driving motor 3 into rotation in another direction to close the driver-seat side window 4. The rotation of the window opening/closing driving motor 3 driven in this other direction is propagated to the driver-seat side window 4 through the window driving mechanism. As a result of the operation, the driver-seat side window 4 is moved in the closing direction. In the former case, the operation to open the driver-seat side window 4 is carried out continuously as long as the window opening switch of the window opening/closing switch 1 is being operated. Similarly, in the latter case, the operation to close the driver-seat side window 4 is carried out continuously as long as the window closing switch of the window opening/closing switch 1 is being operated.

Next, the following description explains an operation which is carried out when a car submerges under water due to some causes, causing water to flow into the inside of the car.

When a car submerges under water due to some causes, causing water to flow into the inside of the car, the water also enters the door pocket on the driver-seat side, inundating the submergence detection sensor employed in the submergence detector 5 provided inside the door pocket on the driver-seat side. The introduction of the water raises the current of the submergence detection sensor to a level higher than a predetermined value, causing the submergence detector 5 to generate a submergence detection signal and supply the submergence detection signal to the control unit 2. At that time, the control unit 2 applies a driving voltage driving the window opening/closing driving motor 3 into rotation in a window opening direction to the window opening/closing driving motor 3 in response to the submergence detection signal supplied thereto without regard to a driving voltage supplied to the window opening/closing driving motor 3 so far in order to drive the window opening/closing driving motor 3 into rotation in the direction. The rotation of the window opening/closing driving motor 3 driven in this direction is propagated to the driver-seat side window 4 through the window driving mechanism. As a result of the operation, the driver-seat side window 4 is moved in the opening direction.

As described above, according to the submergence detection power-window apparatus implemented by the first embodiment, when the car submerges under water, causing the submergence detector 5 to generate a submergence detection signal and supply the submergence detection signal to the control unit 2, the control unit 2 immediately drives the window opening/closing driving motor 3 into rotation in a direction of opening the driver-seat side window 4 in response to the submergence detection signal. As a result, the driver-seat side window 4 is automatically opened, allowing the passengers to escape from the submerging car through the opened window 4 safely.

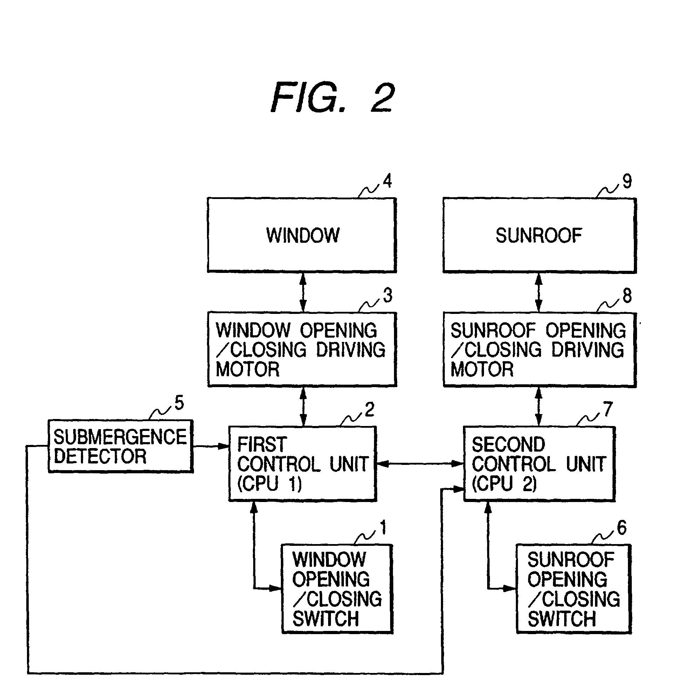

Fig. 2 is a block diagram showing the configuration of a submergence detection power-window apparatus.

As shown in Fig. 2, the power-window apparatus implemented by the second embodiment comprises a sunroof opening/closing switch 6, a second control unit (a second CPU) 7, a sunroof opening/closing driving motor 8 and an electric-power driven sunroof 9 in addition to the configuration elements employed in the first embodiment. In the second embodiment, the control unit 2 employed in the first embodiment is referred to as a first control unit (a first CPU) 2 for the sake of convenience. The other configuration elements of the first embodiment which are employed in the first embodiment are denoted by the same reference numerals as those used in the first embodiment.

Connected to the second control unit 7, the sunroof opening/closing switch 6 comprises a sunroof opening switch and a sunroof closing switch which are not shown in the figure. The second control unit 7 is also connected to the first control unit 2, the sunroof opening/closing driving motor 8 and the submergence detector 5. When the sunroof opening switch of the sunroof opening/closing switch 6 is operated, the sunroof opening/closing driving motor 8 is driven in response to the operation into rotation in a direction, namely, a sunroof opening direction. When the sunroof closing switch of the sunroof opening/closing switch 6 is operated, on the other hand, the sunroof opening/closing driving motor 8 is driven in response to the operation into rotation in another direction, namely, a sunroof closing direction. When a submergence detection signal is generated by the submergence detector 5, the sunroof opening/closing driving motor 8 is driven into rotation in a direction, namely, the sunroof opening direction, to accompany the operation carried out by the first control unit 2 without regard to the operating states of the sunroof closing switch and the sunroof opening switch employed in the sunroof opening/closing switch 6. The sunroof opening/closing driving motor 8 is joined to the electric-motor driven sunroof 9 by a sunroof driving mechanism which is not shown in the figure. With such a joint, when the sunroof opening/closing driving motor 8 is driven into rotation in the sunroof opening direction, the sunroof driving mechanism moves the electric-power driven sunroof 9 in the opening direction. When the sunroof opening/closing driving motor 8 is driven into rotation in the sunroof closing direction, on the other hand, the sunroof driving mechanism moves the electric-power driven sunroof 9 in the closing direction.

The submergence detection power-sunroof apparatus implemented having the configuration described above operates as follows.

First of all, the following description explains an operation which is carried out when the car is in a steady state, that is, in a state of no submergence.

It should be noted that, in the steady state, operations are carried out by the first control unit 2, the window opening/closing driving motor 3 and the driver-seat side window 4 in the same way as the first embodiment described earlier in response to an operation performed by the passenger on the window opening/closing switch 1. Thus, it is not necessary to repeat the explanation of the operations. The following description therefore explains only operations which are carried out by the second control unit 7, the sunroof opening/closing driving motor 8 and the electric-power driven sunroof 9 when the sunroof opening/closing switch 6 is operated by the passenger.

When a passenger operates the sunroof opening switch of the sunroof opening/closing switch 6, the second control unit 7 applies a driving voltage to the sunroof opening/closing driving motor 8 in response to the operation of the sunroof opening switch. The driving voltage drives the sunroof opening/closing driving motor 8 into rotation in a direction to open the electric-power driven sunroof 9. The rotation of the sunroof opening/closing driving motor 8 driven in this direction is propagated to the electric-power driven sunroof 9 through the sunroof driving mechanism. As a result of the operation, the electric-power driven sunroof 9 is moved in the opening direction. When a passenger operates the sunroof closing switch of the sunroof opening/closing switch 6, the second control unit 7 also applies a driving voltage to the sunroof opening/closing driving motor 8 in response to the operation of the sunroof closing switch. However, the driving voltage drives the sunroof opening/closing driving motor 8 into rotation in another direction to close the electric-power driven sunroof 9. The rotation of the sunroof opening/closing driving motor 8 driven in this other direction is propagated to the electric-power driven sunroof 9 through the sunroof driving mechanism. As a result of the operation, the electric-power driven sunroof 9 is moved in the closing direction.

Next, the following description explains an operation which is carried out when a car submerges under water due to some causes, causing water to flow into the inside of the car.

It should be noted that operations in the case of submergence are carried out by the first control unit 2, the window opening/closing driving motor 3, the driver-seat side window 4 and the submergence detector 5 in the same way as the first embodiment described earlier. Thus, it is not necessary to repeat the explanation of the operations. The following description therefore explains only operations carried out by the submergence detector 5, the second control unit 7, the sunroof opening/closing driving motor 8 and the electric-power driven sunroof 9.

When a car submerges under water due to some causes, the submergence detector 5 generates a submergence detection signal and supplies the submergence detection signal to the second control unit 7. At that time, the second control unit 7 applies a driving voltage driving the sunroof opening/closing driving motor 8 into rotation in a certain direction to the sunroof opening/closing driving motor 8 in response to the submergence detection signal supplied thereto without regard to a driving voltage supplied to the sunroof opening/closing driving motor 8 so far in order to drive the sunroof opening/closing driving motor 8 into rotation in the direction. The rotation of the sunroof opening/closing driving motor 8 driven in this direction is propagated to the electric-power driven sunroof 9 through the sunroof driving mechanism. As a result of the operation, the electric-power driven sunroof 9 is moved in the opening direction.

In this case, when a submergence detection signal is supplied to the first control unit 2 and the second control unit 7, the driver-seat side window 4 is controlled and driven by the first control unit 2 to open and, at the same time, the electric-power driven sunroof 9 is controlled and driven by the second control unit 7 to open. As an alternative, the posture of the submerged car detected by the first control unit 2 and the second control unit 7 determines an electric-power driven opening unit to be opened, that is, selects the driver-seat side window 4 or the electric-power driven sunroof 9, which allows passengers to escape safely.

As described above, according to the submergence detection power-sunroof apparatus implemented by the second embodiment, when the car submerges under water, causing the submergence detector 5 to generate a submergence detection signal and supply the submergence detection signal to the first control unit 2 and/or the second control unit 7, the first control unit 2 and/or the second control unit 7 immediately drive the window opening/closing driving motor 3 and/or the sunroof opening/closing driving motor 8 respectively into rotation in a direction of opening the driver-seat side window 4 and/or the electric-power driven sunroof 9 respectively in response to the submergence detection signal. As a result, the driver-seat side window 4 and/or the electric-power driven sunroof 9 are automatically opened, allowing the passengers to escape from the submerging car through the opened window 4 and/or the opened sunroof 9 safely and quickly.

In this case, the driver-seat side window 4 and the electric-power driven sunroof 9 can be opened at the same time to exhibit an effect of providing a plurality of escape routes to passengers. As an alternative, only the electric-power driven sunroof 9 can be opened to exhibit an effect of providing passengers with a longer time to escape from the submerging car before the car submerges under water completely. This is because it is quite within the bounds of probability that the roof of the submerging car is a portion of the car to submerge under water last.

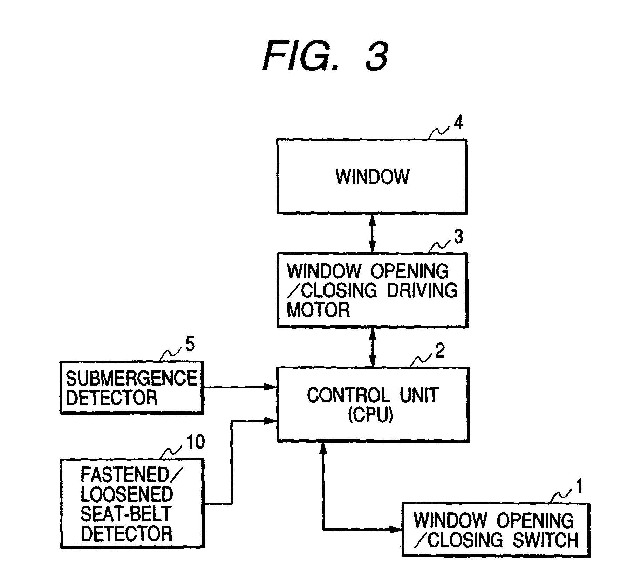

Fig. 3 is a block diagram showing the configuration of an embodiment implementing a submergence detection power-window apparatus provided by the present invention.

As shown in Fig. 3, the power-window apparatus implemented by the third embodiment includes a fastened/loosened seat-belt detector 10 in addition to the configuration elements employed in the first embodiment. Configuration elements identical with those employed in the first embodiment shown in Fig. 1 are denoted by the same reference numerals as the latter.

The fastened/loosened seat-belt detector 10 has a fastened/loosened seat-belt detection sensor which is not shown in the figure. When the fastened/loosened seat-belt detection sensor detects a loosened state of the seat belt, the fastened/loosened seat-belt detector 10 generates a loosened seat-belt detection signal and supplies the signal to the control unit 2.

The submergence detection power-sunroof apparatus implemented by the embodiment having the configuration described above operates as follows.

In a steady state, that is, in a state of no submergence, operations are carried out in the same way as the first embodiment. Thus, it is not necessary to repeat their explanation.

The following description explains an operation which is carried out when a car submerges under water due to some causes, causing water to flow into the inside of the car.

When the car submerges under water, the submergence detection sensor detects the submergence, causing the submergence detector 5 to generate a submergence detection signal and supply the submergence detection signal to the control unit 2. At that time, the passenger loosens or unlocks its seat belt in order to escape from the submerging car. When the passenger loosens or unlocks its seat belt, the loosened seat-belt detection sensor detects a loosened state of the seat belt, causing the fastened/loosened seat-belt detector 10 to generate a loosened-seat-belt detection signal and supply the loosened-seat-belt detection signal to the control unit 2. In response to the supplied submergence detection signal and the supplied loosened-seat-belt detection signal, the control unit 2 applies a driving voltage to the window opening/closing driving motor 3 to drive the window opening/closing driving motor 3 into rotation in a direction to open the driver-seat side window 4 without regard to a driving voltage applied to the window opening/closing driving motor 3 so far. The force to drive the window opening/closing driving motor 3 into rotation in a direction to open the driver-seat side window 4 is propagated to the driver-seat side window 4 through the window driving mechanism. As a result, the driver-seat side window 4 is moved in the opening direction.

As described above, according to the submergence detection power-window apparatus implemented by the third embodiment, when a car submerges under water, causing the submergence detector 5 to generate a submergence detection signal and supply the submergence detection signal to the control unit 2, and if the passenger loosens a seat belt to escape from the submerging car, causing the fastened/loosened-seat-belt detector 10 to generate a loosened-seat-belt detection signal and supply the loosened-seat-belt detection signal to the control unit 2, in response to the submergence detection signal and the loosened-seat-belt detection signal received at the same time, the control unit 2 immediately drives the window opening/closing driving motor 3 in a direction to open the driver-seat side window 4. In this way, the driver-seat side window 4 remains closed till the passenger loosens the seat belt in preparation for escaping from the submerging car. That is, the driver-seat side window 4 is not opened till the seat belt is loosened so that it is possible to prevent water from flowing into the inside of the car with the passenger held back by the fastened seat belt. As a result, the driver-seat side window 4 automatically opens only after the passenger is released from the state constrained by the fastened seat belt, allowing the passenger to escape from the submerging car through the opened driver-seat side window 4 safely and quickly.

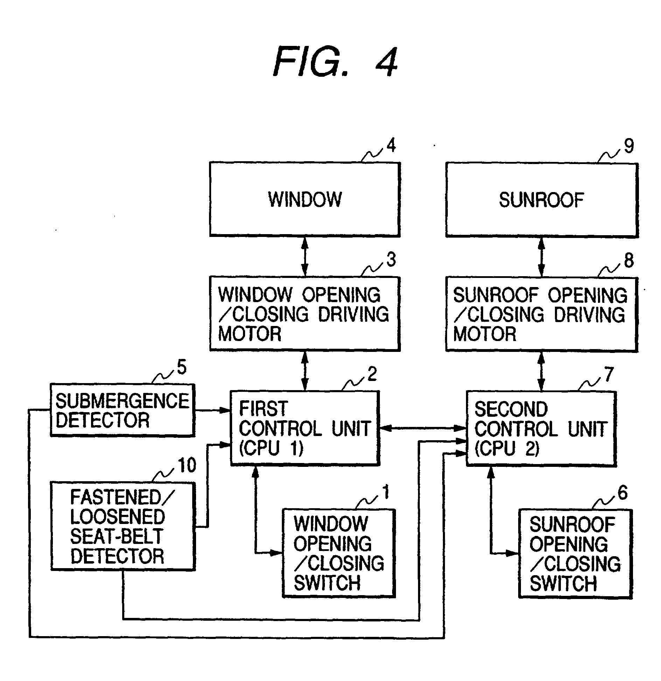

Fig. 4 is a block diagram showing the configuration of an embodiment implementing a submergence detection power-window apparatus provided by the present invention.

As shown in Fig. 4, the power-window apparatus implemented by this embodiment includes the fastened/loosened seat-belt detector 10 employed in the previous embodiment in addition to the configuration elements employed. Configuration elements identical with those employed in the second and third embodiments shown in Figs. 2 and 3 respectively are denoted by the same reference numerals as the latter.

The fastened/loosened seat-belt detector 10 is connected to the first control unit 2 and the second control unit 7. Much like the fastened/loosened seat-belt detector 10 employed in the third embodiment shown in Fig. 3, the fastened/loosened seat-belt detector 10 generates a loosened seat-belt detection signal when the passenger loosens the seat belt.

The submergence detection power-sunroof apparatus implemented by this embodiment having the configuration described above operates as follows.

In a steady state, that is, in a state of no submergence, operations are carried out in the same way as described above. Thus, it is not necessary to repeat their explanation.

The following description explains an operation which is carried out when a car submerges under water due to some causes, causing water to flow into the inside of the car.

When the car submerges under water, the submergence detection sensor detects the submergence, causing the submergence detector 5 to generate a submergence detection signal and supply the submergence detection signal to the first control unit 2 and the second control unit 7. At that time, the passenger loosens or unlocks its seat belt in order to escape from the submerging car. When the passenger loosens or unlocks its seat belt, the loosened seat-belt detection sensor detects a loosened state of the seat belt, causing the fastened/loosened seat-belt detector 10 to generate a loosened-seat-belt detection signal and supply the loosened-seat-belt detection signal to the first control unit 2 and the second control unit 7. In response to the submergence detection signal and the loosened-seat-belt detection signal which are supplied at the same time, the first control unit 2 applies a driving voltage to the window opening/closing driving motor 3 to drive the window opening/closing driving motor 3 into rotation in a direction to open the driver-seat side window 4 without regard to a driving voltage applied to the window opening/closing driving motor 3 so far. The force to drive the window opening/closing driving motor 3 into rotation in a direction to open the driver-seat side window 4 is propagated to the driver-seat side window 4 through the window driving mechanism. As a result, the driver-seat side window 4 is moved in the opening direction. Similarly, in response to the submergence detection signal and the loosened-seat-belt detection signal which are supplied at the same time, the second control unit 7 applies a driving voltage to the sunroof opening/closing driving motor 8 to drive the sunroof opening/closing driving motor 8 into rotation in a direction to open the electric-power driven sunroof 9 without regard to a driving voltage applied to the sunroof opening/closing driving motor 8 so far. The force to drive the sunroof opening/closing driving motor 8 into rotation in a direction is propagated to the electric-power driven sunroof 9 through the sunroof driving mechanism. As a result, the electric-power driven sunroof 9 is moved in the opening direction.

As described above, according to the submergence detection power-window apparatus implemented, when a car submerges under water, causing the submergence detector 5 to generate a submergence detection signal and supply the submergence detection signal to the first control unit 2 and the second control unit 7, and if the passenger loosens a seat belt to escape from the submerging car, causing the fastened/loosened-seat-belt detector 10 to generate a loosened-seat-belt detection signal and supply the loosened-seat-belt detection signal to the first control unit 2 and the second control unit 7, in response to the submergence detection signal and the loosened-seat-belt detection signal received at the same time, the first control unit 2 and/or the second control unit 7 immediately drive the window opening/closing driving motor 3 and/or the sunroof opening/closing driving motor 8 in a direction to open the driver-seat side window 4 and/or the electric-power driven sunroof 9 respectively. As a result, the driver-seat side window 4 and/or the electric-power driven sunroof 9 automatically open only after the passenger is released from the state constrained by the fastened seat belt, allowing the passenger to escape from the submerging car through the opened driver-seat side window 4 and/or the opened electric-power driven sunroof 9 safely and quickly.

In this case, the driver-seat side window 4 and the electric-power driven sunroof 9 can be opened at the same time to exhibit an effect of providing a plurality of escape routes to passengers. As an alternative, only the electric-power driven sunroof 9 can be opened to exhibit an effect of providing passengers with a longer time to escape from the submerging car before the car submerges under water completely. This is because it is quite within the bounds of probability that the roof of the submerging car is a portion of the car to submerge under water last.

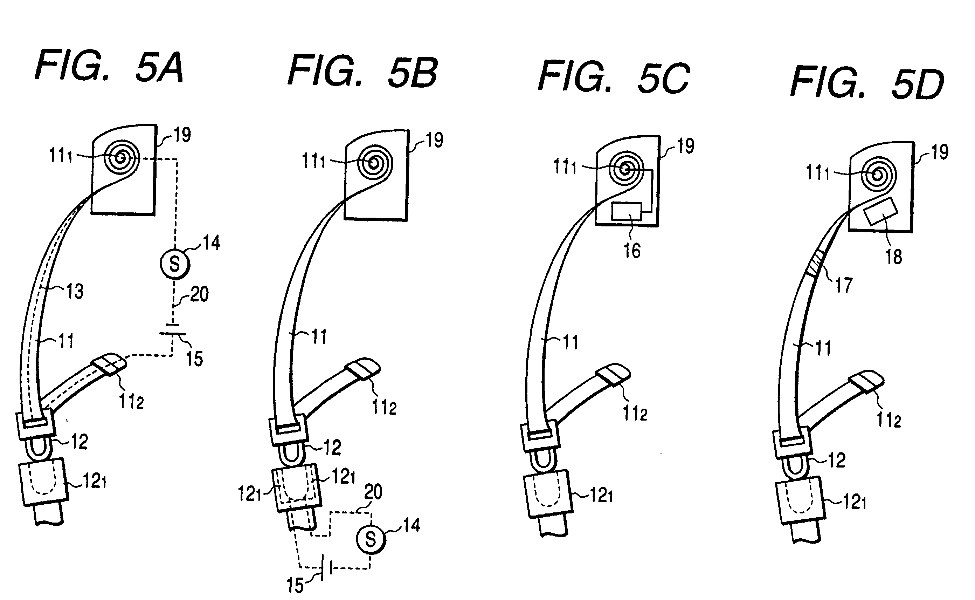

Figs. 5A, 5B, 5C and 5D are explanatory diagrams showing respectively 4 types of the fastened/loosened seat-belt detector 10 employed in the embodiments.

In Figs. 5A to 5D, reference numerals 11 and 11₁ denote a seat belt and a seat belt winder respectively. Reference numeral 11₂ denotes the seat-belt fixed other end and reference numeral 12 denotes a seat-belt buckle. Reference numerals 12₁ and 13 denote a buckle receptacle and a conductor lead respectively. Reference numeral 14 denotes a direct-current value detection unit and reference numeral 15 denotes a direct-current power supply. Reference numerals 16 and 17 denote a rotational-speed detection unit and a covered metallic body respectively. Reference numeral 18 denotes a metal detection unit and reference numeral 19 denotes a seat-belt accommodation unit. Reference numeral 20 denotes an external connection conductor lead.

In the case of the fastened/loosened seat-belt detector 10 of the first type shown in Fig. 5A, the conductor lead 13 is embedded in the seat belt 11. The ends of the seat belt 11 are electrically connected to the seat-belt winder 11₁ and the seat-belt fixed other end 11₂ respectively. The direct-current power supply 15 and the direct-current value detection unit 14 are connected in series by the external connection conductor lead 20 between the seat-belt winder 11₁ and the seat-belt fixed other end 11₂. The seat-belt buckle 12 and the seat-belt fixed other end 11₂ constitute a fastened/loosened seat-belt detection sensor.

In the case of the fastened/loosened seat-belt detector 10 of the second type shown in Fig. 5B, the buckle receptacle 12₁ is divided in transversal direction into 2 portions. The direct-current power supply 15 and the direct-current value detection unit 14 are connected in series by the external connection conductor lead 20 between the 2 portions of the buckle receptacle 12₁. The seat-belt buckle 12 and the 2 portions of the buckle receptacle 12₁ constitute a fastened/loosened seat-belt detection sensor.

In the case of the fastened/loosened seat-belt detector 10 of the third type shown in Fig. 5C, the rotational-speed detection unit 16 is joined to the seat-belt winder 11₁. The rotational-speed detection unit 16 and the seat-belt winder 11₁ constitute a fastened/loosened seat-belt detection sensor.

In the case of the fastened/loosened seat-belt detector 10 of the fourth type shown in Fig. 5D, the covered metallic body 17 is provided on the seat belt 11 at a position separated away from the seat-belt buckle 12 in such a way that, when the seat belt 11 is fastened, the covered metallic body 17 is placed outside the seat-belt accommodation unit 19 and, when the seat belt 11 is loosened, on the other hand, the covered metallic body 17 is positioned inside the seat-belt accommodation unit 19, being covered by the metal detection unit 18. When the seat belt 11 is loosened, the covered metallic body 17 is brought to the inside of the seat-belt accommodation unit 19 at a position adjacent to and facing the metal detection unit 18. The covered metallic body 17 and the metal detection unit 18 constitute a fastened/loosened seat-belt detection sensor.

In the case of the fastened/loosened seat-belt detector 10 of the first type, the seat-belt buckle 12, the seat-belt fixed other end 11₂, the conductor lead 13, the direct-current value detection unit 14, the direct-current power supply 15 and the external connection conductor lead 20 form a current close loop and the direct-current value detection unit 14 detects a flow of current flowing through the loop as long as the seat belt 11 is not disengaged. At that time, the fastened/loosened seat-belt detector 10 does not generate a loosened set-belt detection signal. When the seat belt 11 is disengaged, however, the current close loop formed by the seat-belt buckle 12, the seat-belt fixed other end 11₂, the conductor lead 13, the direct-current value detection unit 14, the direct-current power supply 15 and the external connection conductor lead 20 is broken and the direct-current value detection unit 14 thus does not detect a flow of current. At that time, the fastened/loosened seat-belt detector 10 generates a loosened set-belt detection signal to indicate that the passenger has disengaged the seat belt 11.

In the case of the fastened/loosened seat-belt detector 10 of the second type, the 2 portions of the buckle receptacle 12₁, the direct-current value detection unit 14, the direct-current power supply 15 and the external connection conductor lead 20 form a current close loop and the direct-current value detection unit 14 detects a flow of current as long as the seat-belt buckle 12 is engaged with the receptacle 12₁, that is, as long as the passenger keeps the seat belt 11 fastened. At that time, the fastened/loosened seat-belt detector 10 does not generate a loosened set-belt detection signal. If the seat-belt buckle 12 is disengaged from the receptacle 12₁, on the other hand, the current close loop formed by the 2 portions of the buckle receptacle 12₁, the direct-current value detection unit 14, the direct-current power supply 15 and the external connection conductor lead 20 is broken and the direct-current value detection unit 14 thus does not detect a flow of current. At that time, the fastened/loosened seat-belt detector 10 generates a loosened set-belt detection signal.

In the case of the fastened/loosened seat-belt detector 10 of the third type, the seat belt 11 is not wound around the seat-belt winder 11₁ as long as the seat-belt buckle 12 is engaged with the receptacle 12₁. Thus, the rotational-speed detection unit 16 does not detects a rotational speed of the seat-belt winder 11₁. At that time, the fastened/loosened seat-belt detector 10 does not generate a loosened set-belt detection signal, indicating that the passenger keeps the seat belt 11 fastened. If the seat-belt buckle 12 is disengaged from the receptacle 12₁ or the seat belt 11 is cut, on the other hand, the seat belt 11 is wound around the seat-belt winder 11₁, causing the rotational-speed detection unit 16 to detect a rotational speed of the seat-belt winder 11₁. At that time, the fastened/loosened seat-belt detector 10 generates a loosened set-belt detection signal, indicating that the passenger has loosened the seat belt 11.

In the case of the fastened/loosened seat-belt detector 10 of the fourth type, the seat belt 11 is not wound around the seat-belt winder 11₁ as long as the seat-belt buckle 12 is engaged with the receptacle 12₁. Thus, the covered metallic body 17 veiled by the seat belt 11 is not detected by the metal detection unit 18. At that time, the fastened/loosened seat-belt detector 10 does not generate a loosened set-belt detection signal, indicating that the passenger keeps the seat belt 11 fastened. If the seat-belt buckle 12 is disengaged from the receptacle 12₁ or the seat belt 11 is cut, on the other hand, the seat belt 11 gets wound around the seat-belt winder 11₁, causing the metal detection unit 18 to detect the covered metallic body 17 on the seat belt 11. At that time, the fastened/loosened seat-belt detector 10 generates a loosened set-belt detection signal, indicating that the passenger has loosened the seat belt 11.

A loosened seat-belt detector 10 of any appropriate one of the first to fourth types can be selected for the third or fourth embodiment.

As described above, the electric-power driven opening unit is exemplified by the driver-seat side window 4. It should be noted, however, that the electric-power driven opening unit does not have to be the driver-seat side window 4. For example, the electric-power driven opening unit can be an electric-power driven sunroof or a window other than the driver-seat side window 4.

In addition, one of the electric-power driven opening units is exemplified by the driver-seat side window 4. It should be noted, however, that one of the electric-power driven opening units does not have to be the driver-seat side window 4. For example, one the electric-power driven opening units can be a window other than the driver-seat side window 4.

## Claims

1. A submergence detection power-window apparatus provided with:
a motor (3; 8) for driving opening and closing operations of an electrical-power driven opening unit (4; 9);
a manual switch (1; 6) for opening and closing the electrical-power driven opening unit (4; 9);
a control unit (5; 7) for driving the motor (3; 8) in response to an operation of the manual switch (1; 6) for opening and closing the electrical-power driven opening unit (4; 9); and
a submergence detector (5) for detecting submergence of a car body and generating a submergence detection signal indicating detected submergence;
**characterized by**
a fastened/loosened-seat-belt detector (10) for detecting a fastened state and a loosened state of a seat belt (11) and generating a loosened-seat-belt detection signal indicating a loosened state of the seat belt (11),
wherein:
the control unit (2; 7) drives the motor (3; 8) in a direction to open the electric-power driven opening unit (4; 9) upon reception of the submergence detection signal from the submergence detecton (5) and the loosened-seat-belt detection signal from the fastened/loosened-seat-belt detector (10).

2. A submergence detection power-window apparatus according to claim 1, wherein the fastened/loosened-seat-belt detector (10) generates a loosened-seat-belt detection signal when a fastening unit of a seat-belt buckle (12) is loosened.

3. A submergence detection power-window apparatus according to claim 2, wherein the fastened/loosened-seat-belt detector (10) has a fastened/loosened-seat-belt detection sensor (12, 11₂) provided on a seat-belt winding unit (11₁).

4. A submergence detection power-window apparatus according to any of claims 1 to 3, wherein the fastened/loosened-seat-belt detector (10) generates a loosened-seat-belt detection signal when the seat belt (11) is disengaged.

5. A submergence detection power-window apparatus according to any of claims 1 to 4,
wherein:
the submergence detector (5) includes a pair of mutually facing electroconductive bars placed at positions adjacent to each other and detects water introduced between the electroconductive bars as an indication of submergence of the car body; and
the control unit (5; 7) drives the motor (3; 8) in a direction to open the electric power driven opening unit upon reception of the submergence detection signal.

6. A submergence detection power-window apparatus according to any of claims 1 to 5, wherein the opening unit in a sunroof (9) or a windows on a driver-seat side.

## Patentansprüche

1. Elektrische Fensterhebervorrichtung mit Versenkungsdetektion, aufweisend:
einen Motor (3; 8) zum Auslösen von Öffnungs- und Schließvorgängen einer elektrisch betriebenen Öffnungseinheit (4; 9)
einen manuell betätigbaren Schalter (1; 6) zum Öffnen und Schließen der elektrisch betriebenen Öffnungseinheit (4; 9);
eine Steuereinheit (5; 7) zum Antreiben des Motors (3; 8) in Abhängigkeit von einer Betätigung des manuell betätigbaren Schalters (1; 6) zum Öffnen und Schließen der elektrisch betriebenen Öffnungseinheit (4; 9); und
einen Versenkungsdetektor (5) zum Detektieren des Versenkens eines Fahrzeugkörpers und zum Erzeugen eines Versenkungsdetektionssignals, das ein detektiertes Versenken anzeigt;
**gekennzeichnet durch** einen einen angelegten/gelösten Sicherheitsgurt erfassenden Detektor (10) zum Detektieren eines angelegten Zustands und eines gelösten Zustands eines Sicherheitsgurts (11) und zum Erzeugen eines Detektionssignals für einen gelösten Sicherheitsgurt, das einen gelösten Zustand des Sicherheitsgurtes (11) anzeigt;
wobei die Steuereinheit (2; 7) bei Empfang des Versenkungsdetektionssignals von dem Versenkungsdetektor (5) sowie des Detektionssignals für einen gelösten Sicherheitsgurt von dem einen angelegten/gelösten Sicherheitsgurt detektierenden Detektor (10) den Motor (3; 8) in einer Richtung zum Öffnen der elektrisch betriebenen Öffnungseinheit (4; 9) betätigt.

2. Elektrische Fensterhebervorrichtung mit Versenkungsdetektion nach Anspruch 1,
wobei der einen angelegten/gelösten Sicherheitsgurt erfassende Detektor (10) ein Detektionssignal für einen gelösten Sicherheitsgurt erzeugt, wenn eine Befestigungseinheit einer Sicherheitsgurt-Anschnalleinrichtung (12) gelöst wird.

3. Elektrische Fensterhebervorrichtung mit Versenkungsdetektion nach Anspruch 2,
wobei der einen angelegten/gelösten Sicherheitsgurt erfassende Detektor (10) einen an einer Sicherheitsgurt-Aufwickeleinheit (11₁) vorgesehenen Detektionssensor (12, 11₂) zum Detektieren eines angelegten/gelösten Sicherheitsgurts aufweist.

4. Elektrische Fensterhebervorrichtung mit Versenkungsdetektion nach einem der Ansprüche 1 bis 3,
wobei der einen angelegten/gelösten Sicherheitsgurt erfassende Detektor (10) ein Detektionssignal für einen gelösten Sicherheitsgurt erzeugt, wenn der Sicherheitsgurt (11) aus dem Eingriffszustand gelöst wird.

5. Elektrische Fensterhebervorrichtung mit Versenkungsdetektion nach einem der Ansprüche 1 bis 4,
wobei der Versenkungsdetektor (5) ein Paar einander zugewandt gegenüber liegender elektrisch leitfähiger Leisten aufweist, die an einander benachbarten Positionen platziert sind, sowie zwischen den elektrisch leitfähigen Leisten eindringendes Wasser als Anzeige für ein Versenken des Fahrzeugkörpers detektiert; und
wobei die Steuereinheit (5; 7) bei Empfang des Versenkungsdetektionssignals den Motor (3; 8) in einer Richtung zum Öffnen der elektrisch betriebenen Öffnungseinheit betätigt.

6. Elektrische Fensterhebervorrichtung mit Versenkungsdetektion nach einem der Ansprüche 1 bis 5,
wobei es sich bei der Öffnungseinheit um ein Sonnendach (9) oder um ein Fenster auf der Seite eines Fahrersitzes handelt.

## Revendications

1. Dispositif de glace à commande électrique avec détection de submersion comprenant :
un moteur (3 ; 8) pour effectuer les opérations d'ouverture et de fermeture d'une unité ouvrante à motorisation électrique (4 ; 9) ;
un interrupteur manuel (1 ; 6) pour ouvrir et fermer l'unité ouvrante à motorisation électrique (4 ; 9) ;
une unité de commande (5 ; 7) pour entraîner le moteur (3 ; 8) en réponse à un actionnement de l'interrupteur manuel (1 ; 6) pour ouvrir et fermer l'unité ouvrante à motorisation électrique (4 ; 9) ; et
un détecteur de submersion (5) pour détecter la submersion de la carrosserie d'une automobile et produire un signal de détection de submersion indiquant la submersion détectée ;
**caractérisé par** un détecteur de tension (10) de ceinture de sécurité servant à détecter un état attaché et un état relâché d'une ceinture de sécurité (11) et à produire un signal de détection de ceinture relâchée indiquant un état relâché de la ceinture de sécurité (11),
dans lequel l'unité de commande (2 ; 7) entraîne le moteur (3 ; 8) dans un sens permettant d'ouvrir l'unité ouvrante à motorisation électrique (4 ; 9) après réception du signal de détection de submersion provenant du détecteur de submersion (5) et du signal de détection de ceinture relâchée provenant du détecteur de tension (10) de ceinture de sécurité.

2. Dispositif de glace à commande électrique avec détection de submersion selon la revendication 1, dans lequel le détecteur de tension (10) de ceinture de sécurité produit un signal de détection de ceinture relâchée lorsqu'une unité de fermeture d'une boucle (12) de ceinture de sécurité est relâchée.

3. Dispositif de glace à commande électrique avec détection de submersion selon la revendication 2, dans lequel le détecteur de tension (10) de ceinture de sécurité comporte un capteur (12, 11₂) de détection de tension de ceinture de sécurité placé sur une unité d'enroulement (11,) de ceinture de sécurité.

4. Dispositif de glace à commande électrique avec détection de submersion selon l'une quelconque des revendications 1 à 3, dans lequel le détecteur de tension (10) de ceinture de sécurité produit un signal de détection de ceinture relâchée lorsque la ceinture de sécurité (11) est détachée.

5. Dispositif de glace à commande électrique avec détection de submersion selon l'une quelconque des revendications 1 à 4, dans lequel :
le détecteur de submersion (5) comporte une paire de barrettes électroconductrices se faisant face et placées en des positions voisines l'une de l'autre, et détecte l'eau introduite entre les barrettes électroconductrices comme indication de la submersion de la carrosserie d'automobile ; et
l'unité de commande (5 ; 7) entraîne le moteur (3 ; 8) dans un sens permettant d'ouvrir l'unité ouvrante à motorisation électrique après réception du signal de détection de submersion.

6. Dispositif de glace à commande électrique avec détection de submersion selon l'une quelconque des revendications 1 à 5, dans lequel l'unité ouvrante est un toit ouvrant (9) ou une fenêtre du côté conducteur.
